# EUROPEAN PATENT APPLICATION

(11) **EP 4 832 219 A1**
(43) Date of publication of application: **28.10.2026**
(21) Application number: 24905868.6
(22) Date of filing: 01.11.2024
(51) Int. Cl.: H01M 50/449, H01M 50/491, H01M 50/489, H01M 10/0525

(54) **SECONDARY BATTERY AND ELECTRONIC APPARATUS**

(30) Priority: 19.12.2023 CN 202311768461
(71) Applicant: Ningde Amperex Technology Limited, Ningde, Fujian 352100 (CN)
(72) Inventor: KONG, Gengjin, Ningde, Fujian 352100 (CN); WEI, Zengbin, Ningde, Fujian 352100 (CN); ZENG, Guanyin, Ningde, Fujian 352100 (CN); CHEN, Minjing, Ningde, Fujian 352100 (CN)
(74) Representative: Kraus & Lederer PartGmbB
(86) International application number: PCT/CN2024/129401
(87) International publication number: WO 2025/130380

(57) **Abstract**

Disclosed are a secondary battery and an electronic apparatus. The secondary battery includes a positive electrode plate, a negative electrode plate, and a separator, the separator includes a base film and a coating disposed on at least one surface of the base film, and the coating includes a coating material. The coating is capable of melting and flowing at a temperature greater than or equal to 90°C, a coating weight of the coating on a single side is CW g/m², a density of the coating material is ρ g/cm³, a porosity of the base film is P%, a thickness of the base film is H µm, and 50% ≤ CW/(ρ×P×H)×100% ≤ 120%, where 0.9 ≤ ρ ≤ 1.05, 20 ≤ P ≤ 50, and 3 ≤ H ≤ 10. The separator in the secondary battery can improve thermal safety performance of the secondary battery.

## Description

This application claims priority to Chinese Patent Application No. 202311768461.9, filed on December 19, 2023, and entitled "SECONDARY BATTERY AND ELECTRONIC APPARATUS," the entire content of which is incorporated herein by reference.

### TECHNICAL FIELD

This application relates to the field of electrochemical technologies, and in particular, to a secondary battery and an electronic apparatus.

### BACKGROUND

Secondary batteries, such as lithium-ion batteries, have numerous advantages such as high specific energy density, long cycle life, high nominal voltage, low self-discharge rate, small volume, and light weight, and are widely applied in the field of consumer electronics.

As requirements for energy density (ED) and fast-charging performance of lithium-ion batteries continue to increase, the design of lithium-ion batteries has become increasingly extreme. Currently, high-voltage positive electrodes and fast-charging graphite are commonly used to enhance ED and fast-charging performance. However, due to poor stability and heat resistance, high-voltage positive electrodes and fast-charging graphite react more intensely with the electrolyte at a certain temperature, generating significant heat. The separator cannot achieve timely and effective pore closure, has a slow response speed, and is unable to prevent ion transport and the diffusion of heat and materials between the positive and negative electrodes, thereby affecting the thermal safety performance of the lithium-ion battery.

### SUMMARY

The purpose of this application is to provide a secondary battery and an electronic apparatus to improve the thermal safety performance of the secondary battery. The specific technical solution is as follows:
It should be noted that in the summary of this application, a lithium-ion battery is used as an example of the secondary battery to explain this application, but the secondary battery of this application is not limited to a lithium-ion battery.

A first aspect of this application provides a secondary battery including a positive electrode plate, a negative electrode plate, and a separator. The separator includes a base film and a coating disposed on at least one surface of the base film, the coating includes a coating material, and the coating is capable of melting and flowing at a temperature greater than or equal to 90°C. A coating weight of the coating on one surface is CW g/m², a density of the coating material is ρ g/cm³, a porosity of the base film is P%, a thickness of the base film is H µm, and 50% ≤ CW/(ρ×P×H)×100% ≤ 120%. In some embodiments of this application, 55% ≤ CW/(ρ×P×H)×100% ≤ 100%. 0.9 ≤ ρ ≤ 1.05, 20 ≤ P ≤ 50, and 3 ≤ H ≤ 10. Additionally, 0.5 ≤ CW ≤ 2. The secondary battery provided by this application includes the separator having the above characteristics, with the values of CW/(ρ×P×H)×100%, ρ, P, and H controlled within the above ranges. Under a condition that the secondary battery is in thermal runaway, the coating material satisfying the above density range, combined with the base film satisfying the above porosity range and thickness range, enables the coating on the surface of the base film to have appropriate fluidity. The coating, in combination with the base film, enables the separator to achieve rapid pore closure and suppress the occurrence of thermal runaway in the secondary battery, thereby improving the thermal safety performance of the secondary battery. By further controlling the value of CW, the thermal safety performance of the secondary battery can also be effectively improved. Meanwhile, under normal operating conditions of the secondary battery, other performance of the secondary battery, such as kinetic performance and energy density, is substantially unaffected.

In some embodiments of this application, a pore closure temperature T1 of the coating is 110°C to 130°C. By controlling the pore closure temperature of the coating within the above range, the coating can melt and rapidly fill the pores of the base film when the secondary battery is at risk of thermal runaway, achieving a good pore closure effect, enhancing the thermal shutdown performance of the separator at high temperatures, preventing lithium ion transport and the diffusion of heat and materials between the positive electrode plate and the negative electrode plate, suppressing thermal runaway of the secondary battery, and further improving the thermal safety performance of the secondary battery.

In some embodiments of this application, after the separator is placed at 120°C for 20 min, an area coverage ratio of the coating after melting on the base film is greater than or equal to 80%. The area coverage ratio being within the above range indicates that the coating, after melting, can substantially cover the surface of the base film, allowing the coating to fill most of the pores on the surface of the base film when the secondary battery is at risk of thermal runaway, achieving a good pore closure effect, enhancing the thermal shutdown performance of the separator at high temperatures, preventing lithium ion transport and the diffusion of heat and materials between the positive electrode plate and the negative electrode plate, suppressing thermal runaway of the secondary battery, and further improving the thermal safety performance of the secondary battery.

In some embodiments of this application, a pore closure temperature T0 of the separator is 132°C to 142°C, a pore closure temperature of the base film is T2, and 3°C ≤ T2-T0 ≤ 10°C. By controlling the pore closure temperature T0 of the separator and the difference between the pore closure temperature of the base film and the pore closure temperature of the separator within the above ranges, the low pore closure coating can melt and flow first, blocking the pores of the base film, achieving a good pore closure effect, enhancing the thermal shutdown performance of the separator at high temperatures, preventing lithium ion transport and the diffusion of heat and materials between the positive electrode plate and the negative electrode plate, suppressing thermal runaway of the secondary battery, and further improving the thermal safety performance of the secondary battery.

In some embodiments of this application, 135°C ≤ T2 ≤ 150°C. By controlling the pore closure temperature of the base film within the above range, when the secondary battery is at risk of thermal runaway, first, the base film can close its pores independently, and second the coating can also fill the pores of the base film, achieving a better pore closure effect, further enhancing the thermal shutdown performance of the separator at high temperatures, preventing lithium ion transport and the diffusion of heat and materials between the positive electrode plate and the negative electrode plate, suppressing thermal runaway of the secondary battery, and further improving the thermal safety performance of the secondary battery.

In some embodiments of this application, the coating material satisfies at least one of the following characteristics:
(1) a melting point Tm of 95°C to 125°C; or
(2) a melt flow rate MFR of 12 g/10min to 60 g/10min.

The coating material satisfying at least one of the above characteristics can further improve the thermal safety performance of the secondary battery.

In some embodiments of this application, the coating material includes at least one of polyethylene wax or core-shell structure microspheres. The core-shell structure microspheres include a core material and a shell material, a difference in glass transition temperature between the shell material and the core material is 1.2°C to 10°C, the core material includes at least one of polyethylene wax, polyethylene, polyvinyl acetate, or polymethyl acrylate, and the shell material includes at least one of polymethyl methacrylate, polystyrene, or polyacrylic acid. By selecting the above coating materials, a coating with a pore closure temperature T1 of 110°C to 130°C can be obtained, thereby enabling, in combination with the base film, a good pore closure effect when the secondary battery is at risk of thermal runaway, enhancing the thermal shutdown performance of the separator at high temperatures, preventing lithium ion transport and the diffusion of heat and materials between the positive electrode plate and the negative electrode plate, suppressing thermal runaway of the secondary battery, and further improving the thermal safety performance of the secondary battery.

In some embodiments of this application, an average particle size D of the coating material is 0.2 µm to 1.5 µm. By controlling the average particle size D of the coating material within the above range, the coating has an appropriate thickness, improving the thermal safety performance of the secondary battery while having minimal impact on its energy density.

In some embodiments of this application, a ratio of a puncture strength of the separator to a thickness of the separator is F/H, the unit of the ratio is gf/µm, and 40 gf/µm ≤ F/H ≤ 150 gf/µm. The ratio of the puncture strength of the separator to the thickness of the separator being within the above range indicates that the separator also has good puncture resistance, thereby improving the thermal safety performance of the secondary battery while also offering the secondary battery with good mechanical safety performance.

In some embodiments of this application, the separator satisfies at least one of the following characteristics:
(1) the base film includes at least one of a polyethylene base film, a polypropylene base film, a polyethylene/polypropylene mixed film, a polypropylene/polyethylene/polypropylene composite base film, or a polyvinylidene fluoride base film;
(2) the coating further includes a coating binder, a mass ratio of the coating material to the coating binder is (85 to 97):(3 to 15), and the coating binder includes at least one of polyacrylic acid, polymethacrylic acid, polymethyl methacrylate, acrylate, styrene-acrylate emulsion, acrylate emulsion, lithium polyacrylate, polyvinyl alcohol, carboxymethyl cellulose, sodium carboxymethyl cellulose, lithium carboxymethyl cellulose, polyimide, polyamide-imide, styrene-butadiene rubber, or polyvinylidene fluoride; or
(3) the separator further includes a ceramic coating, the coating is disposed on one surface of the base film and the coating faces towards the positive electrode plate, and the ceramic coating is disposed on another surface of the base film and the ceramic coating faces towards the negative electrode plate.

The separator satisfying at least one of the above characteristics can further improve the thermal safety performance of the secondary battery.

A second aspect of this application provides an electronic apparatus including the secondary battery according to any one of the foregoing embodiments.

### Beneficial effects of this application:

This application provides the secondary battery and the electronic apparatus. The secondary battery includes the positive electrode plate, the negative electrode plate, and the separator, and the separator includes the base film and the coating disposed on the at least one surface of the base film. The coating includes the coating material, the coating is capable of melting and flowing at a temperature greater than or equal to 90°C, the coating weight of the coating on one surface is CW g/m², the density of the coating material is ρ g/cm³, the porosity of the base film is P%, the thickness of the base film is H µm, and 50% ≤ CW/(ρ×P×H)×100% ≤ 120%, where 0.9 ≤ ρ ≤ 1.05, 20 ≤ P ≤ 50, and 3 ≤ H ≤ 10. The separator in the secondary battery provided by this application includes the above characteristics, and can improve thermal safety performance of the secondary battery.

Certainly, implementing any product or method of this application does not necessarily require achieving all the advantages described above.

### BRIEF DESCRIPTION OF DRAWINGS

To more clearly illustrate the technical solutions in the embodiments of this application or in the prior art, a brief introduction to the drawings required for the description of the embodiments or the prior art is provided below. Apparently, the drawings described below are merely some embodiments of this application, and those of ordinary skill in the art can obtain other embodiments based on these drawings.
FIG. 1 shows a DSC curve of a coating material in Example 1-2;
FIG. 2 shows a temperature-resistance curve of a separator in Example 1-2; and
FIG. 3 shows an electron microscope photograph of a sample of the separator in Example 1-2 after being placed in a 120°C oven for 20 min.

### DESCRIPTION OF EMBODIMENTS

The technical solutions in the embodiments of this application are clearly and completely described below in conjunction with the drawings in the embodiments of this application. Apparently, the described embodiments are merely a part of the embodiments of this application, rather than all embodiments. All other embodiments obtained by those skilled in the art based on this application fall within the scope of protection of this application.

It should be noted that in the summary of this application, a lithium-ion battery is used as an example of the secondary battery to explain this application, but the secondary battery of this application is not limited to a lithium-ion battery.

A first aspect of this application provides a secondary battery including a positive electrode plate, a negative electrode plate, and a separator. The separator includes a base film and a coating disposed on at least one surface of the base film, the coating includes a coating material, and the coating is capable of melting and flowing at a temperature greater than or equal to 90°C. A coating weight of the coating on one surface is CW g/m², a density of the coating material is ρ g/cm³, a porosity of the base film is P%, a thickness of the base film is H µm, and 50% ≤ CW/(ρ×P×H)×100% ≤ 120%. In some embodiments of this application, 55% ≤ CW/(ρ×P×H)×100% ≤ 100%. For example, the value of CW/(ρ×P×H)×100% can be 50%, 53%, 55%, 59%, 64%, 68%, 72%, 77%, 80%, 86%, 91%, 97%, 103%, 106%, 111%, 118%, 120%, or a range composed of any two values therebetween. 0.9 ≤ ρ ≤ 1.05. For example, ρ can be 0.9, 0.93, 0.97, 0.99, 1.01, 1.03, 1.05, or a range composed of any two values therebetween. 20 ≤ P ≤ 50. For example, P can be 20, 23, 27, 30, 34, 38, 40, 42, 45, 48, 50, or a range composed of any two values therebetween. 3 ≤ H ≤ 10. For example, H can be 3, 4, 5, 6, 7, 8, 9, 10, or a range composed of any two values therebetween.

Typically, a base film has a porous structure, and after a coating is disposed on the surface of the base film, pores remain that allow active ions (such as lithium ions) in the secondary battery to pass through smoothly. When the temperature of the secondary battery poses a risk of thermal runaway, if the above pores are not blocked in time, the secondary battery will experience thermal runaway issues. Through the synergistic effect of the base film and the coating in this application, when the temperature of the secondary battery poses a risk of thermal runaway, for example, at a temperature greater than or equal to 90°C, the coating can rapidly melt and achieve a high coverage rate on the surface of the base film. In addition, the fluid from the melted coating can fill the pores of the base film, achieving a good pore closure effect, enhancing the thermal shutdown performance of the separator at high temperatures, preventing lithium ion transport and the diffusion of heat and materials between the positive electrode plate and the negative electrode plate, suppressing thermal runaway of the secondary battery, and thereby improving the thermal safety performance of the secondary battery. The density of the coating material is generally related to the type of coating material selected. Typically, when the type of coating material remains unchanged and its density is too low, for example, when ρ is less than 0.9, the coating material is prone to melting and flowing at a relatively low temperature, for example, when the temperature of the secondary battery does not pose a risk of thermal runaway. This blocks the pores of the base film, thereby affecting the charge-discharge performance of the secondary battery, such as charge-discharge performance at low temperatures. When the type of coating material remains unchanged and its density is too high, for example, when ρ is greater than 1.05, the coating material has poor fluidity at a higher temperature, for example, when the temperature of the secondary battery already poses a risk of thermal runaway. This cannot effectively fill the pores of the base film, thereby failing to suppress thermal runaway of the secondary battery and improve its safety performance. When the porosity of the base film is too low, for example, when P is less than 20, it affects the migration of lithium ions between the positive and negative electrodes, thereby affecting the kinetic performance of the secondary battery. When P is too high, for example, when P is greater than 50, it affects the pore closure effect, thereby affecting the thermal safety performance of the secondary battery. When the thickness of the base film is too small, for example, when H is less than 3, the strength of the base film is low, and the processing requirements are high, making industrial production difficult. When the thickness of the base film is too large, for example, when H is greater than 10, the overall thickness of the separator increases, thereby affecting the energy density of the secondary battery. Thus, when the secondary battery provided by this application includes the separator having the above characteristics, with the values of CW/(ρ×P×H)×100%, ρ, P, and H controlled within the above ranges. When the secondary battery is at risk of thermal runaway, the coating on the surface of the base film, in combination with the base film, enables the separator to achieve rapid pore closure and suppress the occurrence of thermal runaway in the secondary battery, thereby improving the thermal safety performance of the secondary battery. Meanwhile, under normal operating conditions of the secondary battery, other performance of the secondary battery, such as kinetic performance, energy density, low-temperature charge-discharge performance, and processing performance, is substantially unaffected. In this application, the above "low temperature" refers to a temperature less than or equal to 30°C, and the above "high temperature" refers to a temperature greater than or equal to 90°C.

In some embodiments of this application, 0.5 ≤ CW ≤ 2. For example, CW can be 0.5, 0.8, 1.1, 1.3, 1.4, 1.7, 1.9, 2, or a range composed of any two values therebetween. By controlling the value of CW within the above range, the thermal safety performance of the secondary battery can be further improved while maintaining its energy density.

In some embodiments of this application, a pore closure temperature T1 of the coating is 110°C to 130°C. For example, the pore closure temperature T1 of the coating can be 110°C, 113°C, 115°C, 117°C, 120°C, 122°C, 125°C, 128°C, 130°C, or a range composed of any two values therebetween. By controlling the pore closure temperature of the coating within the above range, the coating can melt and rapidly fill the pores of the base film when the secondary battery is at risk of thermal runaway, achieving a good pore closure effect, enhancing the thermal shutdown performance of the separator at high temperatures, preventing lithium ion transport and the diffusion of heat and materials between the positive electrode plate and the negative electrode plate, suppressing thermal runaway of the secondary battery, and further improving the thermal safety performance of the secondary battery.

In some embodiments of this application, after the separator is placed at 120°C for 20 min, an area coverage ratio X of the coating after melting on the base film is greater than or equal to 80%. For example, the area coverage ratio X can be 80%, 83%, 85%, 88%, 90%, 92%, 95%, 97%, 100%, or a range composed of any two values therebetween. The area coverage ratio X within the above range indicates that the coating, after melting, can substantially cover the surface of the base film, allowing the coating to fill most of the pores on the surface of the base film when the secondary battery is at risk of thermal runaway, achieving a good pore closure effect, enhancing the thermal shutdown performance of the separator at high temperatures, preventing lithium ion transport and the diffusion of heat and materials between the positive electrode plate and the negative electrode plate, suppressing thermal runaway of the secondary battery, and further improving the thermal safety performance of the secondary battery.

In some embodiments of this application, a pore closure temperature T0 of the separator is 132°C to 142°C, a pore closure temperature of the base film is T2, and 3°C ≤ T2-T0 ≤ 10°C. For example, the pore closure temperature T0 of the separator can be 132°C, 133°C, 134°C, 135°C, 136°C, 137°C, 138°C, 139°C, 140°C, 141°C, 142°C, or a range composed of any two values therebetween. For example, the value of T2-T0 can be 3°C, 4°C, 5°C, 6°C, 7°C, 8°C, 9°C, 10°C, or a range composed of any two values therebetween. By controlling the pore closure temperature T0 of the separator and the difference between the pore closure temperature of the base film and the pore closure temperature of the separator within the above ranges, the low pore closure coating can melt and flow first, blocking the pores of the base film, thereby further improving the thermal safety performance of the secondary battery.

In some embodiments of this application, 135°C ≤ T2 ≤ 150°C. For example, the pore closure temperature T2 of the base film can be 135°C, 136°C, 137°C, 138°C, 139°C, 140°C, 141°C, 142°C, 143°C, 144°C, 145°C, 146°C, 147°C, 148°C, 149°C, 150°C, or a range composed of any two values therebetween. By controlling the pore closure temperature of the base film within the above range, when the secondary battery is at risk of thermal runaway, first, the base film can close its pores independently, and second the coating can also fill the pores of the base film, achieving a better pore closure effect, further enhancing the thermal shutdown performance of the separator at high temperatures, preventing lithium ion transport and the diffusion of heat and materials between the positive electrode plate and the negative electrode plate, suppressing thermal runaway of the secondary battery, and further improving the thermal safety performance of the secondary battery.

In some embodiments of this application, a melting point Tm of the coating material is 95°C to 125°C. For example, the melting point Tm of the coating material can be 95°C, 98°C, 100°C, 103°C, 106°C, 109°C, 110°C, 114°C, 118°C, 120°C, 123°C, 125°C, or a range composed of any two values therebetween. By controlling the melting point of the coating material within the above range, a coating with a pore closure temperature T1 of 110°C to 130°C can be obtained, and the coating can melt and rapidly fill the pores of the base film when the secondary battery is at risk of thermal runaway, achieving a good pore closure effect, enhancing the thermal shutdown performance of the separator at high temperatures, preventing lithium ion transport and the diffusion of heat and materials between the positive electrode plate and the negative electrode plate, suppressing thermal runaway of the secondary battery, and further improving the thermal safety performance of the secondary battery. This application imposes no particular restriction on the method of controlling the melting point of the coating material, as long as the purpose of this application can be achieved. For example, different coating materials can be selected to control the melting point of the coating material.

In some embodiments of this application, a melt flow rate MFR of the coating material is 12 g/10min to 60 g/10min. For example, the melt flow rate MFR of the coating material can be 12 g/10min, 15 g/10min, 18 g/10min, 20 g/10min, 23 g/10min, 37 g/10min, 30 g/10min, 34 g/10min, 39 g/10min, 41 g/10min, 46 g/10min, 50 g/10min, 53 g/10min, 57 g/10min, 60 g/10min, or a range composed of any two values therebetween. By controlling the melt flow rate of the coating material within the above range, a coating with a pore closure temperature T1 of 110°C to 130°C can be obtained, and the coating can melt and rapidly fill the pores of the base film when the secondary battery is at risk of thermal runaway, achieving a good pore closure effect, enhancing the thermal shutdown performance of the separator at high temperatures, preventing lithium ion transport and the diffusion of heat and materials between the positive electrode plate and the negative electrode plate, suppressing thermal runaway of the secondary battery, and further improving the thermal safety performance of the secondary battery. This application imposes no particular restriction on the method of controlling the melt flow rate of the coating material, as long as the purpose of this application can be achieved. For example, different coating materials can be selected to control the melt flow rate of the coating material.

In some embodiments of this application, the coating material includes at least one of polyethylene wax or core-shell structure microspheres. The core-shell structure microspheres include a core material and a shell material, and a difference in glass transition temperature ΔTg between the shell material and the core material is 1.2°C to 10°C. For example, ΔTg can be 1.2°C, 1.8°C, 2.3°C, 2.7°C, 3°C, 3.5°C, 3.9°C, 4°C, 4.3°C, 5°C, 5.6°C, 6°C, 6.8°C, 7.5°C, 8°C, 8.7°C, 9.3°C, 10°C, or a range composed of any two values therebetween. The core material includes at least one of polyethylene wax, polyethylene, polyvinyl acetate, or polymethyl acrylate, and the shell material includes at least one of polymethyl methacrylate, polystyrene, or polyacrylic acid. By selecting the above coating materials, a coating with a pore closure temperature T1 of 110°C to 130°C can be obtained, thereby enabling, in combination with the base film, a good pore closure effect when the secondary battery is at risk of thermal runaway, enhancing the thermal shutdown performance of the separator at high temperatures, preventing lithium ion transport and the diffusion of heat and materials between the positive electrode plate and the negative electrode plate, suppressing thermal runaway of the secondary battery, and further improving the thermal safety performance of the secondary battery. This application imposes no particular restriction on the glass transition temperatures of the core material and the shell material, as long as the purpose of this application can be achieved. For example, a glass transition temperature Tg₁ of the core material can be 108°C to 120°C, and a glass transition temperature Tg₂ of the shell material can be 112°C to 125°C.

In some embodiments of this application, an average particle size D of the coating material is 0.2 µm to 1.5 µm. For example, the average particle size D of the coating material can be 0.2 µm, 0.3 µm, 0.4 µm, 0.5 µm, 0.6 µm, 0.7 µm, 0.8 µm, 0.9 µm, 1 µm, 1.1 µm, 1.2 µm, 1.3 µm, 1.4 µm, 1.5 µm, or a range composed of any two values therebetween. By controlling the average particle size D of the coating material within the above range, the coating has an appropriate thickness, improving the thermal safety performance of the secondary battery while having minimal impact on its energy density. In this application, coating materials with different average particle sizes can be obtained through purchase. The average particle sizes of the coating materials are tested using the "average particle size test for coating material" method provided in this application, to select a coating material with a desired average particle size.

In some embodiments of this application, the base film includes at least one of a polyethylene base film, a polypropylene base film, a polyethylene/polypropylene mixed film, a polypropylene/polyethylene/polypropylene composite base film, or a polyvinylidene fluoride base film. By selecting the above base film, the base film has good strength and can melt and close pores at a temperature where the secondary battery is in thermal runaway, thereby further improving the thermal safety performance of the secondary battery. In this application, a polyethylene/polypropylene mixed film refers to a separator obtained by mixing polyethylene and polypropylene raw materials and processing through separator production techniques such as extrusion, stretching, and extraction. This application imposes no restriction on the content of polyethylene and polypropylene, as long as the purpose of this application can be achieved. A polypropylene/polyethylene/polypropylene composite base film refers to a base film obtained by compositing a polypropylene film, a polyethylene film, and a polypropylene film. This application imposes no restriction on the thickness of the polypropylene film and the polyethylene film, as long as the purpose of this application can be achieved.

In some embodiments of this application, the coating further includes a coating binder, a mass ratio Y of the coating material to the coating binder is (85 to 97):(3 to 15). For example, it can be 85:15, 87:13, 90:10, 92:8, 95:5, 97:3, or a range composed of any two ratios therebetween. The coating binder includes at least one of polyacrylic acid, polymethacrylic acid, polymethyl methacrylate, acrylate, styrene-acrylate emulsion, acrylate emulsion, lithium polyacrylate, polyvinyl alcohol, carboxymethyl cellulose, sodium carboxymethyl cellulose, lithium carboxymethyl cellulose, polyimide, polyamide-imide, styrene-butadiene rubber, or polyvinylidene fluoride. By selecting the above coating binder and controlling the mass ratio of the coating material to the coating binder within the above range, the coating has good adhesion to the base film, is not prone to fall-off during normal operation of the secondary battery, and improves the cycling performance of the secondary battery. When the secondary battery is at risk of thermal runaway, the coating can rapidly melt and fill the pores of the base film, achieving a good pore closure effect, enhancing the thermal shutdown performance of the separator at high temperatures, preventing lithium ion transport and the diffusion of heat and materials between the positive electrode plate and the negative electrode plate, suppressing thermal runaway of the secondary battery, and further improving the thermal safety performance of the secondary battery. In this application, a styrene-acrylate emulsion is obtained by copolymerizing styrene and acrylate, where the acrylate can include but is not limited to at least one of methyl acrylate, ethyl acrylate, butyl acrylate, methyl methacrylate, ethyl methacrylate, or butyl methacrylate. There is no particular restriction on the solid content of the styrene-acrylate emulsion or the mass ratio of styrene to acrylate. For example, the solid content of the styrene-acrylate emulsion can be 30 wt% to 50 wt%, and the mass ratio of styrene to acrylate can be (20 to 50):(50 to 80). Specifically, the copolymer monomers in the styrene-acrylate emulsion include styrene, methyl acrylate, and methyl methacrylate, with a mass ratio of styrene, methyl acrylate, and methyl methacrylate of (20 to 50):(20 to 30):(20 to 60). In this application, an acrylate emulsion is obtained by copolymerizing two or more acrylate monomers, where the acrylate monomers can include but are not limited to at least one of methyl acrylate, ethyl acrylate, butyl acrylate, methyl methacrylate, ethyl methacrylate, butyl methacrylate, acrylic acid, or acrylonitrile. There is no particular restriction on the solid content of the acrylate emulsion. For example, the solid content of the acrylate emulsion can be 30 wt% to 50 wt%. Specifically, the copolymer monomers in the acrylate emulsion include methyl acrylate, acrylic acid, methyl methacrylate, and acrylonitrile, with a mass ratio of methyl acrylate, acrylic acid, methyl methacrylate, and acrylonitrile of (30 to 40):(15 to 25):(25 to 35):(10 to 20).

In some embodiments of this application, a ratio of a puncture strength of the separator to a thickness of the separator is F/H, the unit of the ratio is gf/µm, and 40 gf/µm ≤ F/H ≤ 150 gf/µm. For example, the value of F/H can be 40 gf/µm, 47 gf/µm, 50 gf/µm, 54 gf/µm, 60 gf/µm, 68 gf/µm, 70 gf/µm, 73 gf/µm, 80 gf/µm, 92 gf/µm, 100 gf/µm, 105 gf/µm, 113 gf/µm, 120 gf/µm, 126 gf/µm, 130 gf/µm, 137 gf/µm, 140 gf/µm, 146 gf/µm, 150 gf/µm, or a range composed of any two values therebetween. The ratio of the puncture strength of the separator to the thickness of the separator being within the above range indicates that the separator also has good puncture resistance, thereby improving the thermal safety performance of the secondary battery while also offering the secondary battery with good mechanical safety performance.

This application imposes no particular restriction on the thickness of the separator, as long as the purpose of this application can be achieved. For example, the thickness of the separator can be 3 µm to 10 µm.

In this application, coating materials with different melting points, melt flow rates, and densities can be obtained through purchase. The melting points, melt flow rates, and densities of the coating materials are tested using the "melting point test for coating material," "melt flow rate test for coating material," and "density test for coating material" methods provided in this application, to select a coating material with a desired melting point, melt flow rate, and density.

In this application, base films with different porosities and/or thicknesses can be obtained through purchase. The porosities and thicknesses of the base films are tested using the "porosity test for base film" and "thickness test for base film" methods provided in this application, to select a base film with a desired porosity and/or thickness. This application imposes no particular restriction on the method of controlling the pore closure temperature of the separator, as long as the purpose of this application can be achieved. For example, the pore closure temperature of the separator can be controlled by adjusting the pore closure temperature of the base film and/or the coating. For example, the pore closure temperature of the coating can be controlled by adjusting the type of coating material and the mass ratio of the coating material to the coating binder. The pore closure temperature of the base film can be controlled by selecting different types of base films. In this application, base films with different pore closure temperatures can be obtained through purchase, and the pore closure temperature of the base film is tested using the "pore closure temperature test for base film" method provided in this application, to select a base film with the desired pore closure temperature.

In some embodiments of this application, the separator further includes a ceramic coating, the coating is disposed on one surface of the base film and the coating faces towards the positive electrode plate, and the ceramic coating is disposed on another surface of the base film and the ceramic coating faces towards the negative electrode plate. Through the above configuration, the heat resistance of the separator can be improved. Moreover, the ceramic coating can further enhance the puncture resistance of the separator, thereby further improving the thermal safety performance and mechanical safety performance of the secondary battery.

In some embodiments of this application, the ceramic coating includes inorganic particles and a ceramic coating binder. This application imposes no particular restriction on the inorganic particles. For example, the inorganic particles can include at least one of aluminum oxide, silicon oxide, magnesium oxide, titanium oxide, hafnium dioxide, tin oxide, cerium dioxide, nickel oxide, zinc oxide, calcium oxide, zirconium oxide, yttrium oxide, silicon carbide, boehmite, aluminum hydroxide, magnesium hydroxide, calcium hydroxide, or barium sulfate. This application imposes no particular restriction on the ceramic coating binder. For example, the ceramic coating binder can include but is not limited to at least one of polyacrylic acid, sodium polyacrylate, potassium polyacrylate, lithium polyacrylate, polyimide, polyvinyl alcohol, carboxymethyl cellulose, sodium carboxymethyl cellulose, lithium carboxymethyl cellulose, polyimide, polyamide-imide, styrene-butadiene rubber, or polyvinylidene fluoride. This application imposes no particular restriction on the mass ratio of the inorganic particles to the ceramic coating binder, as long as the purpose of this application can be achieved. For example, the mass ratio of the inorganic particles to the ceramic coating binder can be (90 to 97):(3 to 10).

In this application, the features in the above embodiments can be arbitrarily combined, and the embodiments covered by the above combinations are all within the scope of protection of this application.

In this application, the positive electrode plate can include a positive electrode current collector and a positive electrode material layer disposed on at least one surface of the positive electrode current collector. The above "positive electrode material layer disposed on at least one surface of the positive electrode current collector" means that the positive electrode material layer can be disposed on one surface of the positive electrode current collector along its thickness direction or on both surfaces of the positive electrode current collector along its thickness direction. It should be noted that the "surface" here can refer to the entire region of the surface of the positive electrode current collector or a partial region of the surface of the positive electrode current collector, and this application imposes no particular restriction, as long as the purpose of this application can be achieved. This application imposes no particular restriction on the positive electrode current collector, as long as the purpose of this application can be achieved. For example, it can include aluminum foil, aluminum alloy foil, or a composite current collector (for example, an aluminum-carbon composite current collector).

The positive electrode material layer includes a positive electrode active material. This application imposes no particular restriction on the positive electrode active material, as long as the purpose of this application can be achieved. For example, the positive electrode active material can include but is not limited to at least one of lithium nickel cobalt manganese oxide (for example, NCM811, NCM622, NCM523, NCM111), lithium nickel cobalt aluminum oxide, lithium iron phosphate, lithium-rich manganese-based material, lithium cobalt oxide (LiCoO₂), lithium manganese oxide, lithium manganese iron phosphate, or lithium titanate. The positive electrode material layer can further include a positive electrode conductive agent and a positive electrode binder. This application imposes no particular restriction on the types of the positive electrode conductive agent and the positive electrode binder, as long as the purpose of this application can be achieved. This application imposes no particular restriction on the positive electrode conductive agent, as long as the purpose of this application can be achieved. For example, the positive electrode conductive agent can include but is not limited to at least one of conductive carbon black (Super P), carbon nanotubes (CNTs), carbon fibers, flake graphite, graphene, metal materials, or conductive polymers. The carbon nanotubes can include but are not limited to single-walled carbon nanotubes and/or multi-walled carbon nanotubes. The carbon fibers can include but are not limited to vapor-grown carbon fibers (VGCF) and/or nano-carbon fibers. The metal materials can include but are not limited to metal powder and/or metal fibers. Specifically, the metal can include but is not limited to at least one of copper, nickel, aluminum, or silver. The conductive polymers can include but are not limited to at least one of polyphenylene derivatives, polyaniline, polythiophene, polyacetylene, or polypyrrole. The positive electrode binder can be at least one of the ceramic coating binders mentioned above. This application imposes no particular restriction on the mass ratio of the positive electrode active material, the positive electrode conductive agent, and the positive electrode binder in the positive electrode material layer, and those skilled in the art can select according to actual needs, as long as the purpose of this application can be achieved. This application imposes no particular restriction on the thickness of the positive electrode current collector and the positive electrode material layer, as long as the purpose of this application can be achieved. For example, the thickness of the positive electrode current collector can be 6 µm to 15 µm, and the thickness of the positive electrode material layer can be 30 µm to 120 µm. This application imposes no particular restriction on the thickness of the positive electrode plate, as long as the purpose of this application can be achieved. For example, the thickness of the positive electrode plate can be 50 µm to 250 µm.

Optionally, the positive electrode plate can further include a conductive layer, where the conductive layer is located between the positive electrode current collector and the positive electrode material layer. The composition of the conductive layer is not particularly limited and can be a conventional conductive layer in the art. The conductive layer includes a conductive agent and a binder. This application imposes no particular restriction on the conductive agent and binder in the conductive layer. For example, they can be at least one of the above positive electrode conductive agent and the above positive electrode binder.

In this application, the negative electrode plate can include a negative electrode current collector and a negative electrode material layer disposed on at least one surface of the negative electrode current collector. The above "negative electrode material layer disposed on at least one surface of the negative electrode current collector" means that the negative electrode material layer can be disposed on one surface of the negative electrode current collector along its thickness direction or on both surfaces of the negative electrode current collector along its thickness direction. It should be noted that the "surface" here can refer to the entire region of the surface of the negative electrode current collector or a partial region of the surface of the negative electrode current collector, and this application imposes no particular restriction, as long as the purpose of this application can be achieved. This application imposes no particular restriction on the negative electrode current collector, as long as the purpose of this application can be achieved. For example, it can include copper foil, copper alloy foil, nickel foil, stainless steel foil, titanium foil, foamed nickel, foamed copper, or a composite current collector (for example, lithium-copper composite current collector, carbon-copper composite current collector, nickel-copper composite current collector, or titanium-copper composite current collector).

The negative electrode material layer includes a negative electrode active material. This application imposes no particular restriction on the negative electrode active material, as long as the purpose of this application can be achieved. For example, the negative electrode active material can include but is not limited to at least one of natural graphite, artificial graphite, mesophase microbeads, hard carbon, soft carbon, silicon, silicon-carbon composite, Li-Sn alloy, Li-Sn-O alloy, Sn, SnO, SnO₂, lithiated TiO₂-Li₄Ti₅O₁₂ with spinel structure, or Li-Al alloy.

The negative electrode material layer can further include a negative electrode conductive agent, a negative electrode binder, and a thickener. This application imposes no particular restriction on the types of the negative electrode conductive agent, negative electrode binder, and thickener, as long as the purpose of this application can be achieved. For example, they can be at least one of the above positive electrode conductive agent and the above ceramic coating binder. The thickener can include but is not limited to at least one of sodium carboxymethyl cellulose or lithium carboxymethyl cellulose. This application imposes no particular restriction on the mass ratio of the negative electrode active material, negative electrode conductive agent, negative electrode binder, and negative electrode thickener in the negative electrode material layer, and those skilled in the art can select according to actual needs, as long as the purpose of this application can be achieved. This application imposes no particular restriction on the thickness of the negative electrode material layer, as long as the purpose of this application can be achieved. For example, the thickness of the negative electrode material layer is 30 µm to 120 µm. This application imposes no particular restriction on the thickness of the negative electrode current collector, as long as the purpose of this application can be achieved. For example, the thickness of the negative electrode current collector is 6 µm to 12 µm. This application imposes no particular restriction on the thickness of the negative electrode plate, as long as the purpose of this application can be achieved. For example, the thickness of the negative electrode plate is 50 µm to 250 µm.

Optionally, the negative electrode plate can further include a conductive layer, where the conductive layer is located between the negative electrode current collector and the negative electrode material layer. This application imposes no particular restriction on the composition of the conductive layer, which can be a conventional conductive layer in the art. For example, the conductive layer includes a conductive agent and a binder. This application imposes no particular restriction on the conductive agent and binder in the conductive layer. For example, they can be at least one of the above negative electrode conductive agent and the above negative electrode binder.

In this application, the secondary battery further includes an electrolyte, where the electrolyte includes a lithium salt and a non-aqueous solvent. This application imposes no particular restriction on the lithium salt, as long as the purpose of this application can be achieved. For example, the lithium salt can include but is not limited to at least one of LiPF₆, LiBF₄, LiAsF₆, LiClO₄, LiB(C₆H₅)₄, LiCH₃SO₃, LiCF₃SO₃, LiN(SO₂CF₃)₂, LiC(SO₂CF₃)₃, Li₂SiF₆, lithium bis(oxalato)borate (LiBOB), or lithium difluoro(oxalato)borate. This application imposes no particular restriction on the concentration of the lithium salt in the electrolyte, as long as the purpose of this application can be achieved. This application imposes no particular restriction on the non-aqueous solvent, as long as the purpose of this application can be achieved. For example, it can include but is not limited to at least one of carbonate compounds, carboxylate compounds, ether compounds, or other organic solvents. The above carbonate compounds can include but are not limited to at least one of chain carbonate compounds, cyclic carbonate compounds, or fluorinated carbonate compounds. The above chain carbonate compounds can include but are not limited to at least one of dimethyl carbonate (DMC), diethyl carbonate (DEC), dipropyl carbonate (DPC), methyl propyl carbonate (MPC), ethyl propyl carbonate (EPC), or methyl ethyl carbonate (MEC). The above cyclic carbonate can include but is not limited to at least one of ethylene carbonate (EC), propylene carbonate (PC), butylene carbonate (BC), or vinylene carbonate (VEC). The fluorinated carbonate compounds can include but are not limited to at least one of fluoroethylene carbonate (FEC), 1,2-difluoroethylene carbonate, 1,1-difluoroethylene carbonate, 1,1,2-trifluoroethylene carbonate, 1,1,2,2-tetrafluoroethylene carbonate, 1-fluoro-2-methyl ethylene carbonate, 1-fluoro-1-methyl ethylene carbonate, 1,2-difluoro-1-methyl ethylene carbonate, 1,1,2-trifluoro-2-methyl ethylene carbonate, or trifluoromethyl ethylene carbonate. The above carboxylate compounds can include but are not limited to at least one of methyl formate, methyl acetate, ethyl acetate, n-propyl acetate, tert-butyl acetate, methyl propionate, ethyl propionate, propyl propionate, γ-butyrolactone, decanolide, valerolactone, or caprolactone. The above ether compounds can include but are not limited to at least one of dibutyl ether, tetraethylene glycol dimethyl ether, diethylene glycol dimethyl ether, 1,2-dimethoxyethane, 1,2-diethoxyethane, 1-ethoxy-1-methoxyethane, 2-methyltetrahydrofuran, or tetrahydrofuran. The above other organic solvents can include but are not limited to at least one of dimethyl sulfoxide, 1,2-dioxolane, sulfolane, methyl sulfolane, 1,3-dimethyl-2-imidazolidinone, N-methyl-2-pyrrolidone, dimethylformamide, acetonitrile, trimethyl phosphate, triethyl phosphate, or trioctyl phosphate. This application imposes no particular restriction on the proportion of the non-aqueous solvent in the electrolyte, as long as the purpose of this application can be achieved.

The preparation process of the secondary battery of this application is well known to those skilled in the art, and this application imposes no particular restriction. For example, the preparation process of the secondary battery can include but is not limited to the following steps: stacking the separator, positive electrode plate, separator, and negative electrode plate in sequence, and performing winding, folding, or other operations as needed to obtain a wound electrode assembly, placing the electrode assembly into a packaging bag, injecting the electrolyte into the packaging bag and sealing it to obtain the electrochemical device. Alternatively, stacking the separator, positive electrode plate, separator, and negative electrode plate in sequence, then fixing the four corners of the entire stacked structure with tape to obtain a stacked electrode assembly, placing the electrode assembly into a packaging bag, injecting the electrolyte into the packaging bag, and sealing it to obtain the electrochemical device. In addition, overcurrent prevention elements or guide plates can be placed in the packaging bag as needed to prevent pressure rise inside the electrochemical device and overcharge or overdischarge. The packaging bag is a known packaging bag in the art, and this application imposes no limitation thereon.

A second aspect of this application provides an electronic apparatus including the electrochemical device according to any one of the foregoing embodiments. Thus, the electronic apparatus provided by this application has good performance in use.

This application imposes no particular limitation on the type of electronic apparatus, which can be any electronic apparatus known in the prior art. In some embodiments of this application, the electronic apparatus can include but is not limited to notebook computers, peninput computers, mobile computers, e-book players, portable telephones, portable facsimile machines, portable copiers, portable printers, stereo headphones, video recorders, liquid crystal televisions, portable cleaners, portable CD players, mini disc players, transceivers, electronic organizers, calculators, memory cards, portable recorders, radios, backup power supplies, motors, automobiles, motorcycles, electric bicycles, bicycles, lighting fixtures, toys, game consoles, watches, electric tools, flashlights, cameras, household large-scale storage batteries, and lithium-ion capacitors.

### Examples

Hereinafter, examples and comparative examples are given to more specifically illustrate the examples of this application. Various tests and evaluations were conducted according to the following methods. Unless otherwise specified, "parts" and "%" are on a mass basis.

### Test methods and devices:

### Density test for coating material:

The density of the coating material was calculated using the weighing method. First, the mass of the coating material was weighed using a balance and recorded as M. The weighed coating material was suspended in an ethylene glycol solution in a graduated container, ensuring complete submersion of the coating material and avoiding bubble formation during suspension. The rise in solution height was measured, and the height difference of the solution level between the unsuspended sample and the suspended sample states was recorded as the solution rise height ΔH, with the total volume of the container being V and height H.$Density of coating material = M / \left(VΔH/H\right) .$

### Test of melting point of coating material:

A differential scanning calorimeter was used to test the melting point of the coating material. The coating material sample was placed in a crucible, and under a nitrogen atmosphere, it was heated from 30°C to 300°C at a rate of 10°C/min to obtain the DSC curve of the coating material. The temperature at the peak in the DSC curve was the melting point of the coating material.

### Test for melt flow rate of coating material:

A melt flow rate tester was used to test the melt flow rate of the coating material. The instrument was heated to 110°C, and a standard die with φ2.095±0.005 mm was inserted. The coating material was placed in the barrel and compacted, and the temperature was held for 10 min. The cutting time for the coating material was set to 60s, and under a pressure of 2.16 kg, the coating material was extruded. The melt flow rate MFR of the coating material was calculated. MFR = mT/t, where t was the cutting time of 60s, m was the mass of the coating material, and T was 600s.

### Test for average particle size of coating material:

5 g of coating material was dispersed in 100 mL of water, and ultrasonically dispersed for 30 min with an ultrasonic power of 53 Hz. Then, a Malvern 3000 particle size analyzer was used to test the particle size of the coating material, and the D50 data of the particle size distribution was read from the instrument, which was the average particle size. D50 refers to the particle size corresponding to the cumulative 50% volume particle size starting from the small particle size.

### Test for pore closure temperature of coating:

The coating material was applied on a dry-stretched polypropylene separator (manufacturer: Senior Technology Material, thickness 16 µm), and the coating slurries from each example or comparative example were applied with the same coating weight CW as in each example or comparative example. After drying, the test separators for each example or comparative example were obtained.

The test separator was cut into a fixed size of 5 cm×5 cm and placed in a component composed of ceramic and stainless steel clamps. 10 mL of electrolyte was injected, and the above clamp was placed in an oven at 250°C, which was heated at a rate of 15°C/min. In addition, the resistance and temperature of the clamp were monitored, and data on the resistance and temperature, oven temperature, and time of the clamp were output.

According to the time-resistance curve, the temperature at which the resistance suddenly increased to 1000 Ω was the pore closure temperature of the test separator. Since the melting point of the polypropylene separator was higher than 150°C, the pore closure temperature of the test separator obtained was the pore closure temperature T1 of the coating.

### Test for area coverage ratio of coating covering base film after melting:

The separator was placed in an oven at 120°C for 20 min, then removed, and placed on transparent grid coordinate plastic paper. The regions not covered by the melted coating were marked, and their area was calculated and recorded as S1. Then, the area of the separator S0 was calculated, and the area coverage ratio was X = S1/S0 × 100%.

### Thickness test for base film:

A micrometer was used to uniformly test the thickness at any 10 points on the base film, and the average value was taken as the thickness of the base film.

### Porosity test for base film:

The porosity of the base film was equal to 1 - W/ρ'V, where W was the mass of the base film, ρ' was the density of the base film, and V was the volume of the base film. V = length of base film × width of base film × thickness of base film. The thickness of the base film was measured according to the method in the "thickness test for base film." The length and width of the base film were measured using a ruler. When the base film was a polyethylene base film, ρ' = 0.95 g/cm³. When the base film was a polypropylene base film, ρ' = 0.91 g/cm³. When the base film was a polyvinylidene fluoride base film, ρ' = 1.76 g/cm³. When the base film was a polyethylene/polypropylene mixed film, ρ' = 0.93 g/cm³. When the base film was a polypropylene/polyethylene/polypropylene composite base film, ρ' = 0.92 g/cm³. When the base film was an aramid base film, ρ' = 1.37 g/cm³.

### Test for pore closure temperature of base film:

The test base film was cut into a fixed size of 5 cm×5 cm and placed in a component composed of ceramic and stainless steel clamps. 10 mL of electrolyte was injected. The above clamp was placed in an oven at 250°C, and heated at a rate of 15°C/min. The resistance and temperature of the clamp were monitored, and data on the resistance and temperature, oven temperature, and time of the clamp were output.

According to the time-resistance curve, the temperature at which the resistance suddenly increased to 1000 Ω was the pore closure temperature T2 of the base film.

### Test for pore closure temperature of separator:

The temperature-rise internal resistance method was used to test the pore closure temperature of the separator. First, the separator was cut into a fixed size of 5 cm×5 cm, with the separator size larger than the clamp test region size. The separator was placed in a component composed of ceramic and stainless steel clamps, and 10 mL of electrolyte was injected. The above clamp was placed in an oven with a set temperature of 250°C, and heated at a rate of 15°C/min. In addition, the resistance and temperature of the clamp were monitored, and data on the temperature and resistance, oven temperature, and time of the clamp was output to obtain the temperature-resistance curve. According to the temperature-resistance curve, the temperature at which the resistance suddenly increased to 1000 Ω was the pore closure temperature T0 of the separator.

### Test for puncture strength of separator to thickness ratio f/h of separator:

The separator was fixed on a test clamp with a 10 mm hole in the middle of the clamp. A hemispherical steel nail with a diameter of 1 mm was used, descending at a speed of 120 mm/min. A maximum force when piercing the separator was the puncture strength F of the separator. A micrometer was used to uniformly test the thickness at any 10 points on the separator, and the average value was taken as the thickness H of the separator. F/H was calculated based on F and H obtained through test.

### Hot box test:

At 25±3°C, the battery cell was charged at a constant current of 1.0C to a full charge voltage of 4.5 V, and then further charged at a constant voltage of 4.5 V until the cutoff current was 0.02C, to place it in a fully charged state. The fully charged cell was placed in an oven and heated at a rate of 5°C/min until reaching the specified hot box test temperature of 135°C, and held for one hour. During this process, the state of the lithium-ion battery was observed. If the lithium-ion battery did not catch fire or explode, it passed the hot box test. If the lithium-ion battery caught fire or exploded, it did not pass the hot box test. 10 lithium-ion batteries were tested for each example and comparative example, and the number passed/10 was recorded as the final result.

### Test for low-temperature discharge capacity:

The lithium-ion battery was placed in a 25°C environment for 30 min, and the lithium-ion battery was discharged at a constant current under 0.2C conditions until the final voltage was 3.0 V. Then, the cell was fully charged, charged at a constant charge current of 1.5C to a full charge voltage of 4.45 V, then charged at a constant voltage at the maximum voltage of 4.45 V until the current cutoff was 0.02C, and then discharged at a constant discharge current of 1.0C until the final voltage was 3.0 V. The discharge capacity at 25°C was recorded as C0.

The lithium-ion battery was fully charged at 25°C, charged at a constant charge current of 1.5C to a full charge voltage of 4.45 V, and then charged at a constant voltage at the maximum voltage of 4.45 V until the current cutoff was 0.02C. It was placed in a -10°C environment for 60 min, then discharged at a constant discharge current of 1.0C until the final voltage was 3.0 V. The discharge capacity at -10°C was recorded as C1.$Discharge capacity retention rate at - 10 ° C = C 1 / C 0 \times 100 % .$

### Example 1-1

### <Preparation of separator>

A polyethylene base film was used as the base film, with a viscosity-average molecular weight of polyethylene of 800,000, a thickness H µm of the base film of 6 µm, a porosity P% of 30%, and a pore closure temperature T2 of 142°C.

The coating material polyethylene wax (weight-average molecular weight of 2000) and the coating binder acrylate emulsion were mixed in a mass ratio Y of 95:5, and deionized water was added, to prepare a slurry with a solid content of 40 wt%. The substances were stirred to uniformity to obtain the coating slurry. The density ρ g/cm³ of the coating material was 0.9 g/cm³, the melting point Tm was 95°C, and the melt flow rate MFR was 60 g/10min. The solvent of the acrylate emulsion was water, with a solid content of 45 wt%, and the copolymer monomers in the acrylate emulsion included methyl acrylate, acrylic acid, methyl methacrylate, and acrylonitrile, with a mass ratio of methyl acrylate, acrylic acid, methyl methacrylate, and acrylonitrile of 35:20:30:15.

The coating slurry was uniformly applied on one surface of the base film by using a micro gravure coating method, and dried at 55°C to obtain the separator. The coating weight of the coating on one surface was 1.5 g/m².

### <Preparation of positive electrode plate>

Lithium cobalt oxide (LiCoO₂) as the positive electrode active material, conductive carbon black, and polyvinylidene fluoride (PVDF) were mixed in a mass ratio of 96:2:2, and N-methylpyrrolidone (NMP) was added as a solvent, to prepare a slurry with a solid content of 75 wt%. The foregoing substances were stirred to uniformity to obtain the positive electrode. The positive electrode slurry was uniformly applied on one surface of a positive electrode current collector aluminum foil with a thickness of 10 µm, and dried at 90°C to obtain a positive electrode plate with a negative electrode active material layer applied on one surface and having a coating thickness of 100 µm. The above steps were repeated on another surface of the aluminum foil to obtain a positive electrode plate coated with a positive electrode active material on two surfaces. After drying at 90°C, cold pressing was performed, followed by slitting, welding of tabs, to obtain a positive electrode plate with specifications of 74 mm×867 mm for later use, and the compacted density of the positive electrode material layer was 4.2 g/cm³.

### <Preparation of negative electrode plate>

Artificial graphite as the negative electrode active material, conductive carbon black, styrene-butadiene rubber, and sodium carboxymethyl cellulose were mixed in a mass ratio of 95:1:3:1, and deionized water was added as a solvent, to prepare a slurry with a solid content of 45 wt%. The substances were stirred to uniformity to obtain the negative electrode slurry. The negative electrode slurry was uniformly applied on one surface of a negative electrode current collector copper foil with a thickness of 10 µm, and dried at 90°C to obtain a negative electrode plate with a negative electrode active material layer applied on one surface and having a coating thickness of 100 µm. The above steps were repeated on another surface of the copper foil to obtain a negative electrode plate coated with a negative electrode material layer on two surfaces. After drying at 90°C, cold pressing was performed, followed by slitting, welding of tabs, to obtain a negative electrode plate with specifications of 78 mm×875 mm for later use, and the compacted density of the negative electrode material layer was 1.75 g/cm³.

### <Preparation of electrolyte>

In a glove box with an argon atmosphere where the water content was less than 10 ppm, ethylene carbonate (EC), propylene carbonate (PC), diethyl carbonate (DEC), and dimethyl carbonate (DMC) were mixed in a ratio of EC:PC:DEC:DMC=1:1:1:1 to obtain an organic solvent, then lithium hexafluorophosphate was dissolved in the organic solvent. The substances were mixed uniformly to obtain the electrolyte. Based on the mass of the electrolyte, the mass percentage content of lithium hexafluorophosphate was 12%.

### <Preparation of lithium-ion battery>

The above-prepared separator, positive electrode plate, separator, and negative electrode plate were stacked in sequence, with the separator placed between the positive electrode plate and the negative electrode plate for separation, and wound to obtain an electrode assembly. The electrode assembly was placed into an aluminum-plastic film packaging bag, and dehydrated at 80°C. The prepared electrolyte was injected, followed by processes such as vacuum packaging, standing, formation, degassing, and trimming to obtain the lithium-ion battery. The formation upper limit voltage was 4.15 V, the formation temperature was 80°C, and the formation standing time was 1 h.

### Examples 1-2 to 1-19

Except for adjusting the relevant preparation parameters according to Table 1, the rest were the same as those in Example 1-1.

### Examples 2-1 to 2-16

Except for adjusting the relevant preparation parameters according to Table 1, the rest were the same as those in Example 1-2.

### Comparative Examples 1 to 10

Except for adjusting the relevant preparation parameters according to Table 1, the rest were the same as those in Example 1-1.

The preparation parameters and performance tests of the examples and comparative examples are shown in Tables 1 and 2.

**Table 1**

| | Coating material | Tm (°C) | MFR (g/10 min) | CW (g/ m²) | ρ (g/ cm³) | T1 (°C) | P (%) | H (µm) | CW/(p × P ×H) ×100% | TO (°C) | T2 (°C) | T2-T0 (°C) | F/H (gf/µm ) | Area coverage ratio X (%) | Hot box test | Low-temperature discharge capacity retention rate (%) |
|---|---|---|---|---|---|---|---|---|---|---|---|---|---|---|---|---|
| Example 1-1 | Polyethylene wax | 95 | 60 | 1.5 | 0.9 | 110 | 30 | 6 | 93 | 136 | 142 | 6 | 60 | 94 | 10/10 | 85 |
| Example 1-2 | Core-shell structure microspheres (core: polyvinyl acetate, Tg=108°C; shell: polymethyl methacrylate, Tg=113°C, core-shell mass ratio of 1:1) | 115 | 35 | 1.5 | 1 | 120 | 30 | 6 | 83 | 137 | 142 | 5 | 63 | 89 | 10/10 | 86 |
| Example 1-3 | Core-shell structure microspheres (core: polyvinyl acetate, Tg=120°C; shell: polymethyl methacrylate, Tg=125°C, core-shell mass ratio of 1:1) | 125 | 12 | 1.5 | 1.05 | 130 | 30 | 6 | 79 | 138 | 142 | 4 | 62 | 87 | 10/10 | 86 |
| Example 1-4 | Core-shell structure microspheres (core: polymethyl acrylate, Tg=118°C; shell: polystyrene, Tg=124°C, core-shell mass ratio of 1:1) | 120 | 25 | 2 | 1 | 110 | 30 | 6 | 111 | 133 | 142 | 9 | 69 | 97 | 10/10 | 82 |
| Example 1-5 | Polyethylene wax | 102 | 50 | 0.5 | 0.92 | 120 | 20 | 3 | 91 | 136 | 144 | 8 | 125 | 94 | 10/10 | 82 |
| Example 1-6 | Polyethylene | 125 | 12 | 2 | 0.94 | 130 | 30 | 6 | 118 | 133 | 142 | 9 | 66 | 97 | 10/10 | 82 |
| Example 1-7 | Core-shell structure microspheres (core: polyvinyl acetate, Tg=108°C; shell: polymethyl methacrylate, Tg=113°C, core-shell mass ratio of 2:1) | 110 | 35 | 0.5 | 1 | 120 | 20 | 3 | 83 | 138 | 144 | 6 | 110 | 90 | 10/10 | 81 |
| Example 1-8 | | 110 | 35 | 1.5 | 1 | 120 | 20 | 8 | 94 | 136 | 140 | 4 | 62 | 94 | 10/10 | 82 |
| Example 1-9 | | 110 | 35 | 2 | 1 | 120 | 50 | 6 | 67 | 140 | 144 | 4 | 55 | 83 | 10/10 | 85 |
| Example 1-10 | | 110 | 35 | 0.8 | 1 | 120 | 30 | 3 | 89 | 137 | 145 | 8 | 120 | 92 | 10/10 | 84 |
| Example 1-11 | | 110 | 35 | 2 | 1 | 120 | 30 | 10 | 67 | 139 | 145 | 6 | 65 | 83 | 10/10 | 85 |
| Example 1-12 | | 110 | 35 | 1.4 | 1 | 120 | 30 | 9 | 50 | 142 | 145 | 3 | 70 | 80 | 9/10 | 86 |
| Example 1-13 | | 110 | 35 | 1.5 | 1 | 120 | 30 | 9 | 55 | 141 | 145 | 4 | 70 | 85 | 10/10 | 86 |
| Example 1-14 | | 110 | 35 | 1.8 | 1 | 120 | 30 | 6 | 100 | 135 | 142 | 7 | 62 | 95 | 10/10 | 83 |
| Example 1-15 | | 110 | 35 | 2.0 | 1 | 120 | 30 | 6 | 110 | 133 | 142 | 9 | 65 | 97 | 10/10 | 82 |
| Example 1-16 | Polyethylene wax | 98 | 54 | 1.5 | 0.91 | 115 | 30 | 6 | 92 | 132 | 142 | 10 | 65 | 100 | 10/10 | 82 |
| Example 1-17 | Polyethylene | 135 | 0.7 | 1.5 | 0.95 | 140 | 30 | 6 | 88 | 142 | 142 | 0 | 65 | 80 | 7/10 | 76 |
| Example 1-18 | Polyethylene wax | 97 | 58 | 1.8 | 0.91 | 115 | 30 | 6 | 110 | 127 | 142 | 15 | 56 | 100 | 8/10 | 76 |
| Example 1-19 | Polyethylene | 130 | 10 | 1.5 | 0.94 | 130 | 30 | 6 | 89 | 140 | 142 | 2 | 55 | 90 | 6/10 | 77 |
| Comparative Example 1 | Core-shell structure microspheres (core: polyvinyl acetate, Tg=108°C; shell: polymethyl methacrylate, Tg=113°C, core-shell mass ratio of 1:1) | 110 | 35 | 0.72 | 1 | 120 | 30 | 6 | 40 | 139 | 142 | 3 | 58 | 50 | 1/10 | 71 |
| Comparative Example 2 | Polyethylene wax | 90 | 78 | 2.2 | 0.88 | 100 | 30 | 6 | 139 | 122 | 142 | 20 | 59 | 70 | 7/10 | 55 |
| Comparative Example 3 | Core-shell structure microspheres (core: polyvinyl acetate, Tg=106°C; shell: polymethyl methacrylate, Tg=110°C, core-shell mass ratio of 1:1) | 110 | 39 | 0.3 | 0.9 | 140 | 30 | 6 | 19 | 142 | 142 | 0 | 51 | 30 | 0/10 | 69 |
| Comparative Example 4 | Core-shell structure microspheres (core: polyvinyl acetate, Tg=106°C; shell: polymethyl methacrylate, Tg=110°C, core-shell mass ratio of 1:1) | 110 | 39 | 2.5 | 0.9 | 95 | 30 | 6 | 154 | 120 | 142 | 22 | 65 | 78 | 8/10 | 41 |
| Comparative Example 5 | Polyethylene wax | 85 | 100 | 1.5 | 0.8 | 97 | 30 | 6 | 104 | 118 | 142 | 24 | 61 | 75 | 8/10 | 40 |
| Comparative Example 6 | Polypropylene | 150 | 3 | 1.5 | 1.2 | 110 | 30 | 6 | 69 | 142 | 142 | 0 | 67 | 40 | 1/10 | 65 |
| Comparative Example 7 | Core-shell structure microspheres (core: polyvinyl acetate, Tg=108°C; shell: polymethyl methacrylate, Tg=113°C, core-shell mass ratio of 1:1) | 110 | 35 | 1.5 | 1 | 120 | 15 | 6 | 167 | 120 | 142 | 22 | 120 | 82 | 8/10 | 50 |
| Comparative Example 8 | | 110 | 35 | 1.5 | 1 | 120 | 55 | 6 | 45 | 141 | 142 | 1 | 35 | 40 | 1/10 | 70 |
| Comparative Example 9 | | 110 | 35 | 1.5 | 1 | 120 | 30 | 1 | 500 | 141 | 143 | 2 | 50 | 30 | 0/10 | 50 |
| Comparative Example 10 | | 110 | 35 | 1.5 | 1 | 120 | 30 | 12 | 42 | 141 | 148 | 7 | 155 | 20 | 0/10 | 45 |

| | | | | | | | | | | | | | | | | |
|---|---|---|---|---|---|---|---|---|---|---|---|---|---|---|---|---|
| Note: In Table 1, when T2 was 140°C, the base film was a polyethylene base film, and the viscosity-average molecular weight of polyethylene was 600,000. When T2 was 143°C, 144°C, 145°C, 148°C, the base film was a polyethylene/polypropylene mixed film, and the mass ratios of polyethylene to polypropylene were sequentially 89:11, 88:12, 87:13, 85:15. The rest were the same as those in Example 1-1. | | | | | | | | | | | | | | | | |

From Examples 1-1 to 1-19 and Comparative Examples 1 to 10, it can be seen that in the examples, the values of CW/(ρ×P×H)×100%, ρ, P, H, and further, the value of CW are all within the ranges of this application, while in the comparative examples, at least one of the values of CW/(ρ×P×H)×100%, ρ, P, and H is not within the ranges of this application. The lithium-ion battery obtained in the examples has both a higher number of passes in the hot box test and a low-temperature discharge capacity, indicating that the lithium-ion battery provided by this application has both better safety performance and low-temperature performance.

The pore closure temperature T1 of the coating and the pore closure temperature T2 of the base film affect the pore closure temperature T0 of the separator and the value of T2-T0, thereby affecting the safety performance and low-temperature performance of the lithium-ion battery. From Examples 1-1 to 1-19, it can be seen that when the values of the pore closure temperature T1 of the coating, the pore closure temperature T2 of the base film, and T2-T0 are within the ranges of this application, and the value of F/H of the separator and the area coverage ratio X are also within the ranges of this application, the obtained lithium-ion battery has both a high number of passes in the hot box test and a low-temperature discharge capacity, indicating that the lithium-ion battery provided by this application has both good safety performance and low-temperature performance.

The melting point Tm and melt flow rate MFR of the coating material vary with the type of coating material, which usually affects the pore closure temperature T1 of the coating, thereby affecting the safety performance and low-temperature performance of the lithium-ion battery. From Examples 1-1 to 1-19, it can be seen that when the type, melting point Tm, and melt flow rate MFR of coating material, and the pore closure temperature T1 of the coating are within the ranges of this application, and the value of F/H of the separator and the area coverage ratio X are also within the ranges of this application, the obtained lithium-ion battery has both a high number of passes in the hot box test and a low-temperature discharge capacity, indicating that the lithium-ion battery provided by this application has both good safety performance and low-temperature performance.

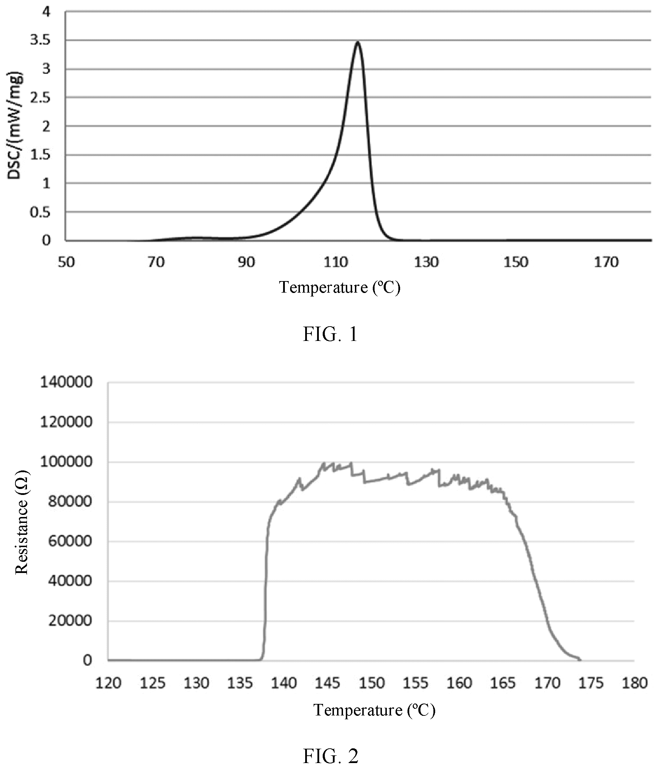

Specifically, FIG. 1 shows the DSC curve of the coating material in Example 1-2. From the figure, it can be seen that the temperature corresponding to the peak is 115°C, so the melting point of the coating material in Example 1-2 is 115°C.

FIG. 2 shows the temperature-resistance curve of the separator in Example 1-2. From the figure, it can be seen that at 137°C, the resistance suddenly increases to 1000 Ω, so the pore closure temperature T0 of the separator in Example 1-2 is 137°C.

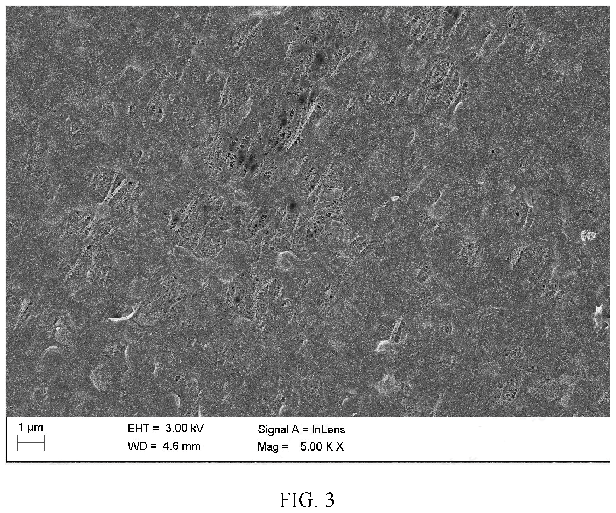

FIG. 3 shows the electron microscope photograph of the sample obtained from the separator in Example 1-2 after being placed in a 120°C oven for 20 min. From the electron microscope photograph, it can be seen that the low pore closure coating had high coverage after high-temperature pore closure, and the pore structure of the base film was basically not visible.

**Table 2**

| | Coating binder | Mass ratio Y | D (µm) | T1 (°C) | T0 (°C) | Base film | T2 (°C) | T2-T0 (°C) | F (gf) | F/H (gf/µm) | Area coverage ratio X (%) | Hot box test | High-temperature discharge capacity retention rate (%) |
|---|---|---|---|---|---|---|---|---|---|---|---|---|---|
| Example 1-2 | Acrylate emulsion | 95:5 | 0.8 | 120 | 137 | Polyethylene and polypropylene mixed film | 142 | 5 | 378 | 63 | 89 | 10/10 | 86 |
| Example 2-1 | Polyacrylic acid | 95:5 | 0.8 | 125 | 138 | | 142 | 4 | 400 | 67 | 85 | 9/10 | 85 |
| Example 2-2 | Polymethyl methacrylate | 95:5 | 0.8 | 124 | 138 | | 142 | 4 | 410 | 68 | 86 | 9/10 | 86 |
| Example 2-3 | Styrene-acrylate emulsion | 95:5 | 0.8 | 127 | 138 | | 142 | 4 | 390 | 65 | 81 | 9/10 | 85 |
| Example 2-4 | Acrylate emulsion | 85:15 | 0.8 | 128 | 139 | | 142 | 3 | 380 | 63 | 81 | 9/10 | 88 |
| Example 2-5 | | 97:3 | 0.8 | 112 | 133 | | 142 | 9 | 350 | 58 | 100 | 10/10 | 85 |
| Example 2-6 | | 95:5 | 0.2 | 110 | 132 | | 142 | 10 | 370 | 62 | 100 | 10/10 | 82 |
| Example 2-7 | | 95:5 | 1.5 | 130 | 139 | | 142 | 3 | 340 | 57 | 80 | 9/10 | 88 |
| Example 2-8 | | 95:5 | 0.8 | 120 | 140 | Polypropylene base film | 148 | 8 | 300 | 50 | 88 | 9/10 | 86 |
| Example 2-9 | | 95:5 | 0.8 | 120 | 142 | Polyvinylidene fluoride base film | 150 | 8 | 280 | 47 | 88 | 9/10 | 84 |
| Example 2-10 | | 95:5 | 0.8 | 120 | 132 | Polyethylene base film (viscosity-average molecular weight of 300,000) | 135 | 3 | 450 | 75 | 89 | 10/10 | 87 |
| Example 2-11 | | 99.5:0.5 | 0.8 | 100 | 110 | Polyethylene and polypropylene mixed film | 142 | 32 | 180 | 30 | 100 | 7/10 | 82 |
| Example 2-12 | | 20:80 | 0.8 | 140 | 142 | | 142 | 0 | 900 | 150 | 60 | 6/10 | 83 |
| Example 2-13 | | 80:20 | 0.8 | 135 | 141 | | 142 | 1 | 440 | 73 | 74 | 7/10 | 82 |
| Example 2-14 | | 99:1 | 0.8 | 105 | 115 | | 142 | 27 | 200 | 33 | 100 | 6/10 | 81 |
| Example 2-15 | | 95:5 | 0.8 | 120 | 124 | Polypropylene/pol yethylene/polyprop ylene composite base film | 130 | 6 | 400 | 67 | 87 | 7/10 | 84 |
| Example 2-16 | | 95:5 | 0.8 | 120 | 148 | Aramid base film | 165 | 17 | 600 | 100 | 87 | 6/10 | 83 |

| | | | | | | | | | | | | | |
|---|---|---|---|---|---|---|---|---|---|---|---|---|---|
| Note: In Table 2, the weight-average molecular weights of the coating binders "polyacrylic acid" and "polymethyl methacrylate" are 200,000 and 150,000, respectively. The copolymer monomers in the coating binder "styrene-acrylate emulsion" include styrene, methyl acrylate, and methyl methacrylate, with a mass ratio of styrene, methyl acrylate, and methyl methacrylate of 40:30:30. The solvent of the emulsion is water, and the solid content of the emulsion is 45 wt%. In the base film "polyethylene and polypropylene mixed film", the mass ratio of polyethylene to polypropylene was 90:10. In the polypropylene/polyethylene/polypropylene composite base film, the thickness ratio of the three layers of films is 1:1:1, where the viscosity-average molecular weight of polypropylene is 400,000, and the viscosity-average molecular weight of polyethylene is 200,000. The aramid base film is a meta-aramid base film. | | | | | | | | | | | | | |

The type of binder in the coating and the mass ratio Y of the coating material to the coating binder usually affect the pore closure temperature T1 of the coating and the pore closure temperature T0 of the separator, thereby affecting the safety performance, low-temperature performance, and cycling performance at room temperature of the lithium-ion battery. From Example 1-2, Examples 2-1 to 2-3, Example 2-11, and Example 2-14, it can be seen that when the type of binder in the coating and the mass ratio Y of the coating material to the coating binder are within the ranges of this application, and the value of F/H of the separator and the area coverage ratio X are also within the ranges of this application, the obtained lithium-ion battery has a high number of passes in the hot box test and a low-temperature discharge capacity, indicating that the lithium-ion battery provided by this application has good safety performance and low-temperature performance.

The average particle size D of the coating material usually affects the pore closure temperature T1 of the coating and the pore closure temperature T0 of the separator, thereby affecting the safety performance, low-temperature performance, and cycling performance at room temperature of the lithium-ion battery. From Example 1-2, Example 2-4, and Example 2-5, it can be seen that when the average particle size D of the coating material is within the range of this application, and the value of F/H of the separator and the area coverage ratio X are also within the ranges of this application, the obtained lithium-ion battery has a high number of passes in the hot box test and a low-temperature discharge capacity, indicating that the lithium-ion battery provided by this application has good safety performance and low-temperature performance.

The type of base film affects the pore closure temperature T2 of the base film, which usually affects the safety performance, low-temperature performance, and cycling performance at room temperature of the lithium-ion battery. From Example 1-2, Examples 2-8 to 2-10, Example 2-15, and Example 2-16, it can be seen that when the type of base film and the pore closure temperature T2 of the base film are within the ranges of this application, and the value of F/H of the separator and the area coverage ratio X are also within the ranges of this application, the obtained lithium-ion battery has a high number of passes in the hot box test and a low-temperature discharge capacity, indicating that the lithium-ion battery provided by this application has good safety performance and low-temperature performance.

It should be noted that in this text, the terms "include," "comprise," or any other variant thereof are intended to cover a non-exclusive inclusion, such that a process, method, or article that includes a series of elements not only includes those elements but also includes other elements not expressly listed or inherent to such process, method, or article.

The above descriptions are merely preferred embodiments of this application and are not intended to limit this application. Any modifications, equivalent substitutions, or improvements made within the spirit and principles of this application shall all be included within the scope of protection of this application.

## Claims

1. A secondary battery comprising a positive electrode plate, a negative electrode plate, and a separator, wherein the separator comprises a base film and a coating disposed on at least one surface of the base film, the coating comprises a coating material, the coating is capable of melting and flowing at a temperature greater than or equal to 90°C, a coating weight of the coating on one surface is CW g/m², a density of the coating material is ρ g/cm³, a porosity of the base film is P%, a thickness of the base film is H µm, and 50% ≤ CW/(ρ×P×H)×100% ≤ 120%; wherein 0.9 ≤ ρ ≤ 1.05, 20 ≤ P ≤ 50, and 3 ≤ H ≤ 10.

2. The secondary battery according to claim 1, wherein 0.5 ≤ CW ≤ 2.

3. The secondary battery according to claim 1, wherein 55% ≤ CW/(ρ×P×H)×100% ≤ 100%.

4. The secondary battery according to claim 1, wherein a pore closure temperature T1 of the coating is 110°C to 130°C.

5. The secondary battery according to claim 1, wherein after the separator is placed at 120°C for 20 min, an area coverage ratio of the coating after melting on the base film is greater than or equal to 80%.

6. The secondary battery according to claim 1, wherein a pore closure temperature T0 of the separator is 132°C to 142°C, a pore closure temperature of the base film is T2, and 3°C ≤ T2-T0 ≤ 10°C.

7. The secondary battery according to claim 6, wherein 135°C ≤ T2 ≤ 150°C.

8. The secondary battery according to claim 1, wherein the coating material satisfies at least one of the following characteristics:
(1) a melting point Tm of 95°C to 125°C; or
(2) a melt flow rate MFR of 12 g/10min to 60 g/10min.

9. The secondary battery according to claim 8, wherein the coating material comprises at least one of polyethylene, polyethylene wax, or core-shell structure microspheres, the core-shell structure microsphere comprises a core material and a shell material, a difference in glass transition temperature between the shell material and the core material is 1.2°C to 10°C, the core material comprises at least one of polyethylene wax, polyethylene, polyvinyl acetate, or polymethyl acrylate, and the shell material comprises at least one of polymethyl methacrylate, polystyrene, or polyacrylic acid.

10. The secondary battery according to claim 1, wherein an average particle size D of the coating material is 0.2 µm to 1.5 µm.

11. The secondary battery according to claim 1, wherein a ratio of a puncture strength of the separator to a thickness of the separator is F/H, the unit of the ratio is gf/µm, and 40 gf/µm ≤ F/H ≤ 150 gf/µm.

12. The secondary battery according to claim 1, wherein the separator satisfies at least one of the following characteristics:
(1) the base film comprises at least one of a polyethylene base film, a polypropylene base film, a polyethylene/polypropylene mixed film, a polypropylene/polyethylene/polypropylene composite base film, or a polyvinylidene fluoride base film;
(2) the coating further comprises a coating binder, a mass ratio of the coating material to the coating binder is (85 to 97):(3 to 15), and the coating binder comprises at least one of polyacrylic acid, polymethacrylic acid, polymethyl methacrylate, acrylate, styrene-acrylate emulsion, acrylate emulsion, lithium polyacrylate, polyvinyl alcohol, carboxymethyl cellulose, sodium carboxymethyl cellulose, lithium carboxymethyl cellulose, polyimide, polyamide-imide, styrene-butadiene rubber, or polyvinylidene fluoride; or
(3) the separator further comprises a ceramic coating, the coating is disposed on one surface of the base film and the coating faces towards the positive electrode plate, and the ceramic coating is disposed on another surface of the base film and the ceramic coating faces towards the negative electrode plate.

13. An electronic apparatus comprising the secondary battery according to any one of claims 1 to 12.
